# EUROPÄISCHE PATENTSCHRIFT

(11) **EP 3 170 678 B1**
(45) Veröffentlichungstag und Bekanntmachung des Hinweises auf die Patenterteilung: **06.06.2018**
(21) Anmeldenummer: 15195160.5
(22) Anmeldetag: 18.11.2015
(51) Int. Cl.: B60B 27/00, B60B 27/02

(54) **RADNABE**
WHEEL HUB
MOYEU DE ROUE

(43) Veröffentlichungstag der Anmeldung: 24.05.2017
(73) Patentinhaber: Georg Fischer GmbH, 40822 Mettmann (DE); Georg Fischer Automobilguss GmbH, 78224 Singen (DE); Georg Fischer Automotive (Kunshan) Co Ltd, 215300 Kunshan City Jiangsu (CN)
(72) Erfinder: Hartmann, Stephan, 78244 Gottmadingen (DE); Kupferschmid, Roger, 8261 Hemishofen (CH); Braun, Gian, 8462 Rheinau (CH); Mahnig, Dominik, 8200 Schaffhausen (CH)
(74) Vertreter: Fenner, Seraina

(56) Entgegenhaltungen:
- CN-U- 203 780 219
- FR-A- 1 010 066
- US-A1- 2014 197 676

## Beschreibung

Die Erfindung betrifft eine Radnabe aus Guss, insbesondere für Nutzfahrzeuge beinhaltend einen Radnabenkörper, wobei der Radnabenkörper aus den axial aneinandergereihten Abschnitten aussenliegender Erweiterungsabschnitt, Halsabschnitt und vorzugsweise Bremsscheibenabschnitt besteht, einen Radflansch, wobei der Radflansch an den Radnabenkörper angeformt ist, vorzugsweise im Bereich zwischen dem aussenliegenden Erweiterungsabschnitt und dem Halsabschnitt, eine Durchgangsbohrung, wobei sich die Durchgangbohrung axial durch den kompletten Radnabenkörper erstreckt, wobei der aussenliegende Erweiterungsabschnitt eine Innenhülse und ein Verstärkungsskelett aufweist, wobei das Verstärkungsskelett und die Innenhülse koaxial angeordnet sind und das Verstärkungsskelett die Innenhülse umgibt.

Derartige Radnaben werden an angetriebenen wie auch an nicht angetriebenen Achsen von Fahrzeugen eingesetzt, insbesondere von Nutzfahrzeugen was eine hohe Festigkeit der Radnabe erfordert und dies wiederum massive Bauformen erfordert die ein hohes Gewicht aufweisen da sie meist aus Gussmaterial oder als Schmiedeteil hergestellt sind.

Die EP 2 572 900 A1 offenbart eine gegossene Radnabe, die den Nachteil des hohen Gewichts aufgrund ihrer massiven Bauform aufweist.

Ein weiterer Nachteil an solchen Radnaben besteht auch darin, dass die entwickelte Wärme schlecht abgeleitet werden kann aufgrund der geschlossenen und kompakten Bauformen. Dies kann eine Überhitzung der Radlagern zur Folge haben, die eine niedrige Temperaturbeständigkeit aufweisen.

Die EP 0 133 922 A2 offenbart eine entsprechende Leichtbauradnabe, welche das Gewicht der Radnabe reduziert und die Festigkeit dennoch gewährleistet. Jedoch besteht dort das Problem der ungünstigen Wärmeableitung.

Die DE 10 2014 009 454 A1 beschreibt eine mögliche Bauform einer Radnabe, welche ein reduziertes Gewicht aufweist und durch die am Umfang angeordneten radialen Vorsprünge ist die Ableitung der Wärme auch gegeben.

Weitere Ausführungsformen von Radnaben werden in FR 1 010 066 A, US 2014/197676 A1 und CN 203 780 219 U offenbart.

Es ist Aufgabe der Erfindung eine Radnabe vorzuschlagen, welche ein reduziertes Gewicht aufweist aber dennoch keine Festigkeitseinbusse in Kauf nehmen muss sowie eine verbesserte Wärmeableitung gegeben sein muss.

Diese Aufgabe wird erfindungsgemäss dadurch gelöst, dass zwischen der äusseren Oberfläche der Innenhülse und der Innenfläche des Verstärkungsskeletts bzw. die Innenflächen der Rippen ein Kanal gebildet wird..

Die erfindungsgemässe Radnabe ist aus Guss und kann für angetriebene wie auch für nicht angetriebene Achsen eingesetzt werden. Die erfindungsgemässe Radnabe wird vorzugsweise bei Nutzfahrzeugen wie beispielsweise Lastwagen, Busse, Sattelaufleger, usw. eingesetzt.

Die Radnabe weist einen Radnabenkörper auf, der sich in mehrere Abschnitte einteilen lässt, wobei die komplette Radnabe natürlich einstückig ist bzw. als ein Gussteil ausgebildet ist.

Die axial aneinandergereihten Abschnitte in die sich die Radnabe einteilen lässt sind ein aussenliegender Erweiterungsabschnitt, ein Halsabschnitt und vorzugsweise auf der gegenüberliegenden Seite des aussenliegenden Erweiterungsabschnitts, ein Bremsscheibenabschnitt. Der Bremsscheibenabschnitt ist im Fahrzeug eingebauten Zustand in Richtung Fahrzeugmitte gerichtet und dient der Aufnahme der Bremsscheibe, wobei es dazu verschiedene Bremsscheibenaufnahmen gibt und die Erfindung nicht nur auf die dargestellte Variante beschränkt ist.

Zwischen den Abschnitten des aussenliegenden Erweiterungsabschnitts und dem Halsabschnitt in axialer Richtung ist der Radflansch angeordnet, der zur Befestigung der Felge dient. Dieser ist an den Radnabenkörper abgeformt bzw. angegossen, da wie bereits erwähnt die Radnabe ein in einem Stück gegossenes Teil ist.

Eine Durchgangsbohrung erstreckt sich in axialer Richtung über die komplette Radnabe bzw. Radnabenkörper.
Abhängig von der Anwendung bzw. dem Einsatzgebiet kann eine Radlageraufnahme in der Durchgangsbohrung angeordnet sein um die Lager darin anzuordnen und die Radnabe auf der Achse zu lagern, wobei auch andere Ausgestaltungen denkbar sind.

Der aussenliegende Erweiterungsabschnitt ist in eingebautem Zustand der Radnabe gegen die Aussenseite des Fahrzeugs gerichtet, das heisst, dass eine Felge an der Aussenseite des Radflansches befestigt wird, vorzugsweise mittels Bolzen in den dafür vorgesehenen Bohrungen im Radflansch.

Der aussenliegende Erweiterungsabschnitt weist wie bereits erwähnt eine Innenhülse auf und ein Verstärkungsskelett, wobei beide koaxial angeordnet sind. Zudem umgibt das Verstärkungsskelett die Innenhülse, dadurch ist es möglich die Wandstärke der Innenhülse relativ dünnwandig zu gestalten und trotzdem die Rechtwinkligkeit zwischen der Achse der Radnabe und dem Radflansch auch bei hoher Belastung sicher zu stellen bzw. dass sich der Radflansch nicht zur senkrecht verlaufenden Achse bzw. dem Radnabenkörper abbiegt, trotz solch dünner Wandstärke der Innenhülse.
Das Verstärkungskelett dient so der Versteifung der Radnabe.

Das Verstärkungsskelett ist am Aussenumfang der Innenhülse im axial äusseren Bereich bzw. an der Seite der Innenhülse, die gegen die Aussenseite des Fahrzeugs gerichtet ist angeformt und die andere Seite des Verstärkungsskeletts ist an der Aussenseite des Radflansches angeformt, wobei auch hier mit Aussenseite die Seite in Bezug auf die Aussenseite eines Fahrzeugs gemeint ist.

Durch die Verbindung bzw. das Zusammenführen des Verstärkungsskeletts und der Innenhülse im axial äusseren Bereich werden Anformungen gebildet, wobei mehrere Anformungen entlang des Aussenumfangs der Innenhülse angeordnet sind. Die Anformungen erstrecken sich vorzugsweise regelmässig über den Umfang der Innenhülse.

Aus den Anformungen heraus in Richtung Aussenseite Radflansch erstrecken sich Rippen, welche unteranderem das Verstärkungsskelett bilden.
Die Rippen sind ebenfalls um den Umfang der Innenhülse angeordnet da sie sich wie bereits erwähnt aus den Anformungen heraus erstecken. Die Rippen verbreitern sich zur Aussenseite des Radflansches hin und verbinden sich vor der Anformung an die Aussenseite Radflansch zu einem geschlossenen Ring, der sich dann an die Aussenseite Radflansch anformt.
Dadurch umgibt das Verstärkungsskelett die Innenhülse und sind koaxial wie auch konzentrisch zueinander angeordnet.

Das Verstärkungsskelett verläuft konisch, das heisst demzufolge auch, dass die einzelnen Rippen, welche zwischen den zwei Befestigungsstellen, auf der einen Seite die Anformung im äusseren axialen Bereich der Innenhülse und auf der anderen Seite der Übergang in den geschlossenen Ring der sich dann an der Aussenseite Radflansch anformt, frei schwebend sind und während ihres Verlaufs nicht mit der Innenhülse verbunden sind. Dadurch wird ein ringsum verlaufender Kanal zwischen äusserer Oberfläche Innenhülse und Innenfläche des Verstärkungsskeletts bzw. der Rippen gebildet. Da dieser Kanal sich mit den Durchgängen im Radflansch verbindet ermöglicht das eine gute Luftdurchströmung und dient der Wärmeabfuhr.

Ein Ausführungsbeispiel der Erfindung wird anhand der Figuren beschrieben, wobei sich die Erfindung nicht nur auf das Ausführungsbeispiel beschränkt. Es zeigen:
- Fig. 1: eine dreidimensionale Ansicht einer erfindungsgemässen Radnabe, wobei die zur Fahrzeugaussenseite gerichtete Stirnseite der Radnabe nach vorne zeigt,
- Fig. 2: eine dreidimensionale Ansicht einer erfindungsgemässen Radnabe, wobei die zur Fahrzeuginnenseite gerichtete Stirnseite nach vorne zeigt,
- Fig. 3: eine zweidimensionale Ansicht eines Längsschnitts durch eine erfindungsgemässe Radnabe, wobei der Schnitt zwischen zwei Rippen verläuft,
- Fig. 4: eine dreidimensionale Ansicht eines Längsschnitts durch eine erfindungsgemässe Radnabe, wobei der Schnitt zwischen zwei Rippen verläuft,
- Fig. 5: eine zweidimensionale Ansicht eines Längsschnitts durch eine erfindungsgemässe Radnabe, wobei der Schnitt entlang einer Rippe verläuft und
- Fig. 6: eine dreidimensionale Ansicht eines Längsschnitts durch eine erfindungsgemässe Radnabe, wobei der Schnitt entlang einer Rippe verläuft.

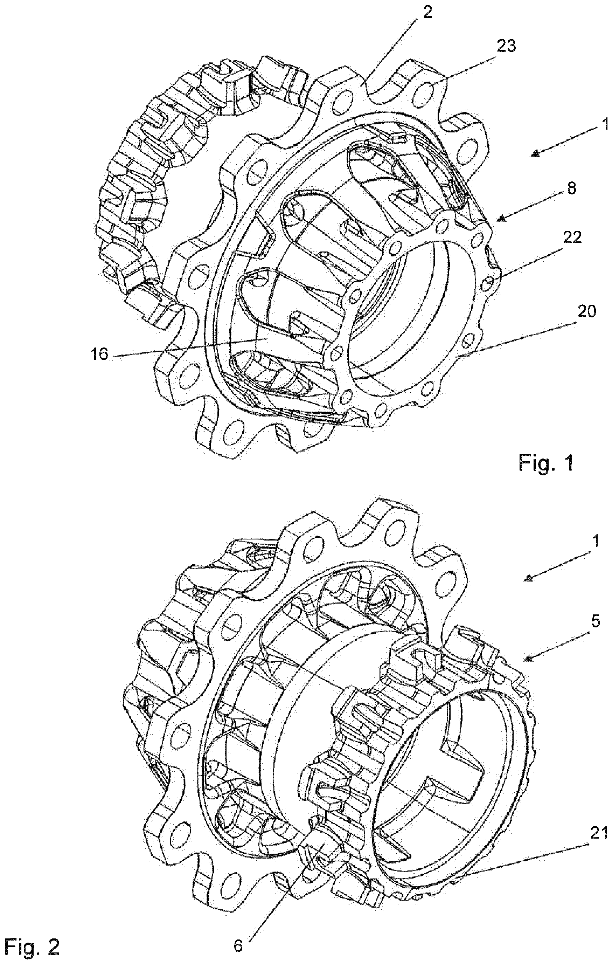

Fig. 1 und 2 zeigen die erfindungsgemässe Radnabe 1 dreidimensional. In Fig. 1 ist die Radnabe 1 so ausgerichtet, als würde man von aussen auf das Rad eines Fahrzeugs sehen. In Fig. 2 zeigt die nach innen gerichtete Seite der Radnabe nach vorne. Die erfindungsgemässe Radnabe 1 ist aus Guss hergestellt und wird vorzugsweise für Nutzfahrzeuge eingesetzt. Die äussere Stirnseite 20 weist Bohrungen 22 auf, welche erst nach dem Giessprozess in der Stirnseite 20 angebracht werden, wie auch die Durchgangsbohrungen 23 zur Befestigung einer Felge.

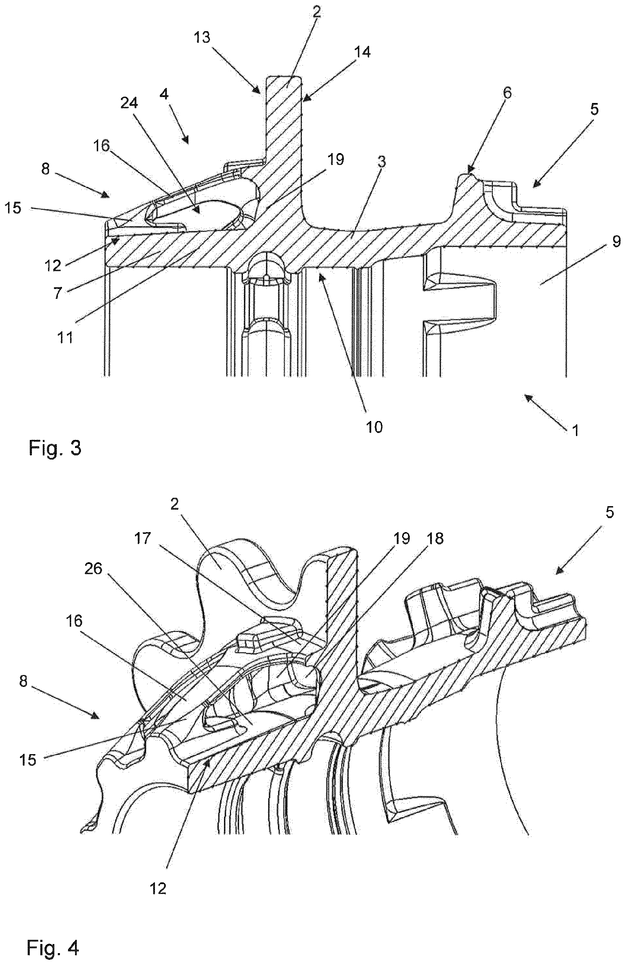

Fig. 3 zeigt die erfindungsgemässe Radnabe 1 im Längsschnitt, wobei der Schnitt zwischen zwei Rippen 16 des Verstärkungsskeletts 8 verläuft, was in Fig. 4 gut ersichtlich ist. Die erfindungsgemässe Radnabe 1 beinhaltet einen Radnabenkörper 11, wobei der in Abschnitte unterteilt werden kann, wenn auch die Radnabe 1 ein einstückig gegossenes Teil ist. Der Radnabenkörper 11 weist einen aussenliegenden Erweiterungsabschnitt 4 auf, der in Richtung der Aussenseite des Fahrzeugs gerichtet ist. Daran schliesst der Halsabschnitt 3 an auf den vorzugsweise der Bremsscheibenabschnitt 5 folgt. Selbstverständlich kann auch ein anderer Aufbau des Radnabenkörpers 11 möglich sein, dies ist auf das Fahrzeug abzustimmen.

Am Bremsabschnitt 5 wird mittels der Bremsaufnahme 6 die Bremsscheibe (nicht dargestellt) befestigt, wobei auch andere Befestigungsvarianten denkbar sind. Durch die komplette Radnabe 1 bzw. den Radnabenkörper 11 hindurch ragt die Durchgangsbohrung 9. In der abgebildeten Ausführungsform weist die Durchgangsbohrung 9 Radlageraufnahmen 10 auf um darin die Lager aufzunehmen und die Radnabe 1 auf der Fahrzeugachse zu lagern.
Selbstverständlich sind auch andere Ausführungen denkbar, da zumal die erfindungsgemässe Radnabe 1 für angetriebene wie auch für nicht angetriebene Achsen einsetzt werden kann.

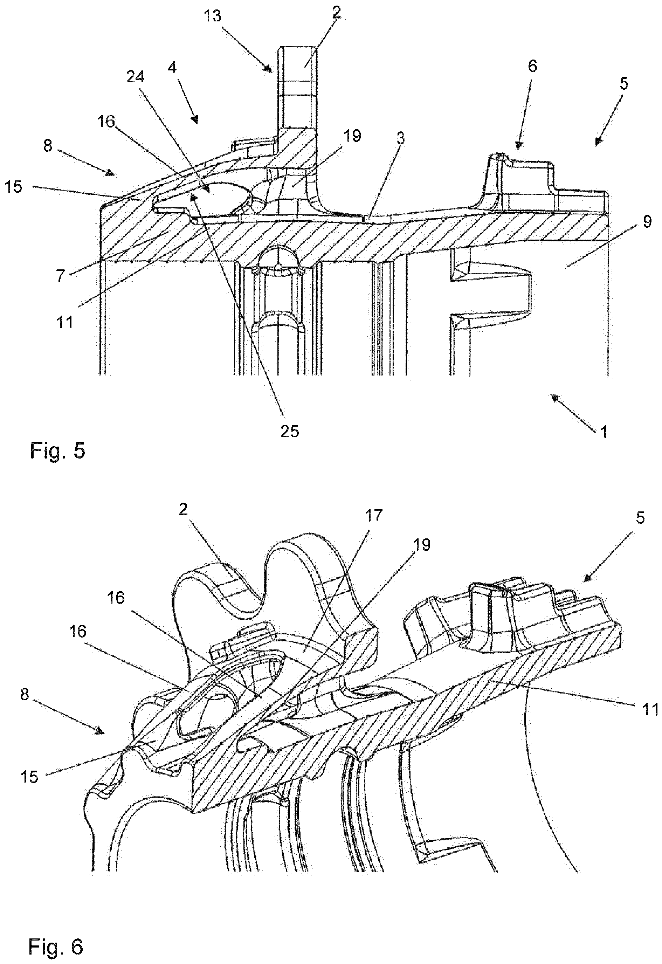

Der Radflansch 2 zur Befestigung des Rads ist im Bereich zwischen dem aussenliegenden Erweiterungsabschnitt 4 und dem Halsabschnitt 3 angeordnet, wobei der Radflansch 2 über Stege 19 am Radnabenkörper 11 angeformt ist, wodurch zwischen den Stegen 19 Durchgänge 18 gebildet werden, dies ist in Fig. 5 und 6 gut erkennbar da der Längsschnitt dort durch eine Rippe 16 des Verstärkungsskeletts 8 verläuft. Der Radflansch 2 ist in der dargestellten Ausführung am Aussenumfang wellenartig ausgebildet um auch hier Gewicht einzusparen. Selbstverständlich sind auch andere Aussenkonturen wie beispielsweise eine blosse Kreisform möglich.

An den Halsabschnitt 3 schliesst der aussenliegende Erweiterungsabschnitt 4 an. Dieser weist eine Innenhülse 7 auf, die vom konzentrisch und koaxial verlaufenden Verstärkungsskelett 8 umgeben ist. Das heisst, am äusseren axialen Bereich 12 der Innenhülse 7 sind Anformungen 15 des Verstärkungsskeletts 8 angeformt aus denen sich die Rippen 16 des Verstärkungsskeletts 8 erstrecken. Das Verstärkungsskelett 8 verläuft konisch und erstreckt sich bis zur Aussenseite Radflansch 13. Die Rippen 16 des Verstärkungsskeletts 8 verbreitern sich am Umfang bis sie vor der Aussenseite Radflansch 13 zu einem geschlossenen Ring 17 zusammenlaufen, wobei die Verbreiterung der Rippen 16 nicht konstant erfolgen muss sondern auch ein mehr oder weniger abruptes Zusammenlaufen der Rippen 16 kurz vor dem geschlossenen Ring 17 erfolgen kann, wie aus den Figuren ersichtlich ist. Dadurch, dass die Rippen 16 nur an den Anformungen 15, die vorzugsweise regelmässig am Umfang der Innenhülse 7 angeordnet sind, und über den geschlossenen Ring 17, der an der Aussenseite Radflansch 13 angeformt ist, befestigt und sonst frei schwebend sind bildet sich zwischen der äusseren Oberfläche 26 der Innenhülse 7 und der Innenseite 25 der Rippen 16 bzw. des Verstärkungsskeletts 8 ein Kanal 24, wobei der Kanal 24 ringsum zwischen dem Verstärkungsskelett 8 und der Innenhülse 7 verläuft. Der Kanal 24 zusammen mit den Durchgängen 18 im Radflansch 5 lässt eine gute Wärmeableitung durch einen möglichen Luftstrom zu.
Durch das Verstärkungsskelett 8 ist nun gewährleistet, dass ein Neigen des Radflansches 2 zur senkrecht dazu verlaufenden Achse bzw. Radnabenkörper 11 auch bei hohen Belastungen verunmöglicht wird, da das Verstärkungsskelett 8 eine Versteifung in diesem Bereich bildet und dennoch eine Leichtbauvariante der Radnabe 1 zulässt. Dadurch kann auf dicke Wandstärken des Radlagerkörpers 11 vor allem im aussenliegenden Erweiterungsabschnitt 4 verzichtet werden.

### Bezugszeichenliste

- 1: Radnabe
- 2: Radflansch
- 3: Halsabschnitt
- 4: Aussenliegender Erweiterungsabschnitt
- 5: Bremsscheibenabschnitt
- 6: Bremsscheibenaufnahme
- 7: Innenhülse des aussenliegenden Erweiterungsabschnitts
- 8: Verstärkungsskelett
- 9: Durchgangsbohrung
- 10: Radlageraufnahme
- 11: Radnabenkörper
- 12: Axial äusserer Bereich am Aussenumfang der Innenhülse
- 13: Aussenseite Radflansch
- 14: Innenseite Radflansch
- 15: Anformung
- 16: Rippe
- 17: Geschlossener Ring
- 18: Durchgang Radflansch
- 19: Steg Radflansch
- 20: Äussere Stirnseite
- 21: Innere Stirnseite
- 22: Bohrung
- 23: Durchgangsbohrung
- 24: Kanal
- 25: Innenfläche Verstärkungsskelett bzw. der Rippen
- 26: Äussere Oberfläche Innenhülse

## Patentansprüche

1. Radnabe (1) aus Guss, insbesondere für Nutzfahrzeuge beinhaltend einen Radnabenkörper (11), wobei der Radnabenkörper (11) aus den axial aneinandergereihten Abschnitten aussenliegender Erweiterungsabschnitt (4), Halsabschnitt (3) und vorzugsweise Bremsscheibenabschnitt (5) besteht, einen Radflansch (2), wobei der Radflansch (2) an den Radnabenkörper (11) angeformt ist, vorzugsweise im Bereich zwischen dem aussenliegenden Erweiterungsabschnitt (4) und dem Halsabschnitt (3), eine Durchgangsbohrung (9), wobei sich die Durchgangbohrung axial durch den kompletten Radnabenkörper (11) erstreckt, wobei der aussenliegende Erweiterungsabschnitt (4) eine Innenhülse (7) und ein Verstärkungsskelett (8) aufweist, wobei das Verstärkungsskelett (8) und die Innenhülse (7) koaxial angeordnet sind und das Verstärkungsskelett (8) die Innenhülse (7) umgibt, **dadurch gekennzeichnet, dass** zwischen der äusseren Oberfläche (26) der Innenhülse (7) und der Innenfläche (25) des Verstärkungsskeletts (8) bzw. die Innenflächen der Rippen (16) ein Kanal (24) gebildet wird.

2. Radnabe 1 nach Anspruch 1, **dadurch gekennzeichnet, dass** das Verstärkungsskelett (8) am Aussenumfang der Innenhülse (7) im axial äusseren Bereich (12) des aussenliegenden Erweiterungsabschnitts (4) und an der Aussenseite (13) des Radflansches (2) angeformt ist.

3. Radnabe (1) nach Anspruch 1 oder 2, **dadurch gekennzeichnet, dass** das Verstärkungsskelett (8) am Aussenumfang der Innenhülse (7) im axial äusseren Bereich (12) des aussenliegenden Erweiterungsabschnitts (4) Anformungen (15) aufweist, wobei mehrere Anformungen (15) entlang des Aussenumfangs der Innenhülse (7) angeordnet sind, vorzugsweise regelmässig.

4. Radnabe (1) nach einem der Ansprüche 1 bis 3, **dadurch gekennzeichnet, dass** das Verstärkungsskelett (8) Rippen (16) aufweist, wobei sich die Rippen (16) aus den Anformungen (15) bis hin zur Aussenseite (13) des Radflansches (2) erstrecken.

5. Radnabe (1) nach Anspruch 4, **dadurch gekennzeichnet, dass** die Rippen (16) sich in Richtung Aussenseite (13) des Radflansch (2) hin verbreitern und zu einem geschlossenen Ring (17) zusammenlaufen, wobei der geschlossene Ring (17) an der Aussenseite (13) des Radflansches (2) angeformt ist.

6. Radnabe (1) nach einem der vorangehenden Ansprüche, **dadurch gekennzeichnet, dass** sich das Verstärkungsskelett (8) vom axial äusseren Bereich (12) am Aussenumfang der Innenhülse (7) konisch zur Aussenseite (13) des Radflansches (2) erstreckt.

7. Radnabe (1) nach Anspruch 8, **dadurch gekennzeichnet, dass** der konische Verlauf des Verstärkungsskeletts (8) stetig zur Innenhülse (7) verläuft.

8. Radnabe (1) nach einem der vorherigen Ansprüche, **dadurch gekennzeichnet, dass** der Radflansch (2) mittels Stegen (19) am Radnabenkörper (11) angeformt ist, wobei zwischen den Stegen (19) entlang des Umfangs des Radnabenkörpers (11) Durchgänge (18) gebildet werden.

9. Radnabe (1) nach einem der vorherigen Ansprüche, **dadurch gekennzeichnet, dass** die Rippen (16) des Verstärkungsskeletts (8) zwischen den Anformungen (15) und dem geschlossenen Ring (17) frei schwebend sind.

## Claims

1. Wheel hub (1) made from cast material, in particular for commercial vehicles, comprising a wheel hub body (11), wherein the wheel hub body (11) consists of the axially successive sections of an outer extension section (4), a neck section (3) and preferably a brake disc section (5), further comprising a wheel flange (2), wherein the wheel flange (2) is formed integrally on the wheel hub body (11), preferably in the region between the outer extension section (4) and the neck section (3), and a through hole (9), wherein the through hole extends axially through the entire wheel hub body (11), wherein the outer extension section (4) has an inner sleeve (7) and a reinforcing skeleton (8), wherein the reinforcing skeleton (8) and the inner sleeve (7) are arranged coaxially, and the reinforcing skeleton (8) surrounds the inner sleeve (7), **characterized in that** a channel (24) is formed between the outer surface (26) of the inner sleeve (7) and the inner surface (25) of the reinforcing skeleton (8) or inner surfaces of the ribs (16).

2. Wheel hub (1) according to Claim 1, **characterized in that** the reinforcing skeleton (8) is formed integrally on the outer circumference of the inner sleeve (7) in the axially outer region (12) of the outer extension section (4) and on the outside (13) of the wheel flange (2).

3. Wheel hub (1) according to Claim 1 or 2, **characterized in that** the reinforcing skeleton (8) has integrally formed portions (15) on the outer circumference of the inner sleeve (7), in the axially outer region (12) of the outer extension section (4), wherein a plurality of integrally formed portions (15) is arranged along the outer circumference of the inner sleeve (7), preferably in a regular pattern.

4. Wheel hub (1) according to one of Claims 1 to 3, **characterized in that** the reinforcing skeleton (8) has ribs (16), wherein the ribs (16) extend out of the integrally formed portions (15) as far as the outside (13) of the wheel flange (2).

5. Wheel hub (1) according to Claim 4, **characterized in that** the ribs (16) widen in the direction of the outside (13) of the wheel flange (2) and merge to form a continuous ring (17), wherein the continuous ring (17) is formed integrally on the outside (13) of the wheel flange (2).

6. Wheel hub (1) according to one of the preceding claims, **characterized in that** the reinforcing skeleton (8) extends conically from the axially outer region (12) on the outer circumference of the inner sleeve (7) to the outside (13) of the wheel flange (2).

7. Wheel hub (1) according to Claim 8, **characterized in that** the conical profile of the reinforcing skeleton (8) extends in a continuous manner to the inner sleeve (7).

8. Wheel hub (1) according to one of the preceding claims, **characterized in that** the wheel flange (2) is formed integrally on the wheel hub body (11) by means of webs (19), wherein passages (18) are formed between the webs (19) along the circumference of the wheel hub body (11).

9. Wheel hub (1) according to one of the preceding claims, **characterized in that** the ribs (16) of the reinforcing skeleton (8) are unsupported between the integrally formed portions (15) and the continuous ring (17).

## Revendications

1. Moyeu de roue (1) en fonte, en particulier pour des véhicules utilitaires comprenant un corps de moyeu de roue (11), dans lequel le corps de moyeu de roue (11) se compose des parties axialement alignées partie d'élargissement extérieure (4), partie de col (3) et de préférence partie de disque de frein (5), une aile de moyeu (2), dans lequel l'aile de moyeu (2) est façonnée sur le corps de moyeu de roue (11), de préférence dans la région comprise entre la partie d'élargissement extérieure (4) et la partie de col (3), un alésage de passage (9), dans lequel l'alésage de passage (9) s'étend axialement à travers tout le corps de moyeu de roue (11), dans lequel la partie d'élargissement extérieure (4) présente une douille intérieure (7) et une ossature de renforcement (8), dans lequel l'ossature de renforcement (8) entoure la douille intérieure (7), **caractérisé en ce qu'**un canal (24) est formé entre la surface extérieure (26) de la douille intérieure (7) et la face intérieure (25) de l'ossature de renforcement (8) ou les faces intérieures des nervures (16).

2. Moyeu de roue (1) selon la revendication 1, **caractérisé en ce que** l'ossature de renforcement (8) est façonnée à la périphérie extérieure de la douille intérieure (7) dans la région axialement extérieure (12) de la partie d'élargissement extérieure (4) et sur le côté extérieur (13) de l'aile de moyeu (2).

3. Moyeu de roue (1) selon la revendication 1 ou 2, **caractérisé en ce que** l'ossature de renforcement (8) présente des façonnages (15) sur la périphérie extérieure de la douille intérieure (7) dans la région axialement extérieure (12) de la partie d'élargissement extérieure (4), dans lequel plusieurs façonnages (15) sont disposés, de préférence régulièrement, le long de la périphérie extérieure de la douille intérieure (7).

4. Moyeu de roue (1) selon l'une quelconque des revendications 1 à 3, **caractérisé en ce que** l'ossature de renforcement (8) présente des nervures (16), dans lequel les nervures (16) s'étendent depuis les façonnages (15) jusqu'au côté extérieur (13) de l'aile de moyeu (2).

5. Moyeu de roue (1) selon la revendication 4, **caractérisé en ce que** les nervures (16) s'élargissent en direction du côté extérieur (13) de l'aile de moyeu (2) et se rejoignent en un anneau fermé (17), dans lequel l'anneau fermé (17) est façonné sur le côté extérieur (13) de l'aile de moyeu (2).

6. Moyeu de roue (1) selon l'une quelconque des revendications précédentes, **caractérisé en ce que** l'ossature de renforcement (8) s'étend depuis la région axialement extérieure (12) sur la périphérie extérieure de la douille intérieure (7) sous forme conique vers le côté extérieur (13) de l'aile de moyeu (2).

7. Moyeu de roue (1) selon la revendication 8, **caractérisé en ce que** l'allure conique de l'ossature de renforcement (8) s'étend en continu par rapport à la douille intérieure (7).

8. Moyeu de roue (1) selon l'une quelconque des revendications précédentes, **caractérisé en ce que** l'aile de moyeu (2) est façonnée sur le corps de moyeu de roue (11) au moyen d'entretoises (19), dans lequel des passages (18) sont formés entre les entretoises (19) le long de la périphérie du corps de moyeu de roue (11).

9. Moyeu de roue (1) selon l'une quelconque des revendications précédentes, **caractérisé en ce que** les nervures (16) de l'ossature de renforcement (8) sont librement flottantes entre les façonnages (15) et l'anneau fermé (17).
